# EUROPEAN PATENT APPLICATION

(11) **EP 4 579 496 A1**
(43) Date of publication of application: **02.07.2025**
(21) Application number: 23461704.1
(22) Date of filing: 29.12.2023
(51) Int. Cl.: G06F 21/31, H04L 9/32

(54) **A METHOD FOR USER AUTHENTICATION IN A COMPUTER SYSTEM USING AN ORACLE AND A CORRESPONDING COMPUTER SYSTEM**

(71) Applicant: Ennecor Sp. z o.o., 44-100 Gliwice (PL)
(72) Inventor: JUSZCZYNSKI, Jan, 44-113 Gliwice (PL); FIOLKA, Krzysztof, 47-451 Bienkowice (PL); FIOLKA, Marcin, 47-400 Raciborz (PL); FIOLKA, Tomasz, 47-411 Rudnik (PL); STODULKIEWICZ, Blazej, 40-750 Katowice (PL); JAGIELLO, Katarzyna, 42-217 Czestochowa (PL); BENDOR, Patryk, 42-217 Czestochowa (PL); JAGIELLO, Ewelina, 44-100 Gliwice (PL)
(74) Representative: Kancelaria Eupatent.pl Sp. z.o.o

(57) **Abstract**

A computer system for authenticating a user (10) of the computer system (25) by means of an oracle (16), comprising a pluggable authentication module (17) within the computer system (25) and an external security key (15), based on user authentication proofs (22) and a zero-knowledge proof protocol. The external security key (15) comprises: a first artificial neural network (13) configured to receive user authentication proofs (11) and first supplementary data (21) and to generate first output data (18), and a second artificial neural network (14) configured to receive the first output data (18) and second supplementary data (20) and to generate second output data (19). The pluggable authentication module (17) is configured to generate first supplementary data (21) and second supplementary data (20) dedicated to the user to be authenticated.

## Description

### TECHNICAL FIELD

The present invention pertains to the field of cryptography within the realm of computer system security. More specifically, it concerns a method for authenticating a user of a computer system using an oracle, wherein the oracle problem is addressed using a hardware artificial neural network that is reconfigurable through a metamorphic testing approach.

### BACKGROUND

In the field of information technology (IT), decision-making processes are crucial. Only high-quality information should be employed in these processes. Information deemed to be of high quality should possess the following attributes:
- Accuracy: The information should correspond to the recipient's level of knowledge and provide a comprehensive description of the topic.
- Timeliness: The information should be current and valuable.
- Completeness: The information should contain an adequate amount of data to enable its transformation into concrete knowledge.
- Consistency: The various elements and data within the information should form a logical whole.
- Relevance: The information should be presented and described appropriately to allow for correct interpretation.
- Accessibility: The information should be readily available as needed by the recipients.
- Reliability: The information should verify the authenticity of the data and include elements that confirm the message's trustworthiness.

Many decision-making methods employed in IT, particularly in software and control system development, utilize oracles. An oracle is expected to determine the correct output for all possible inputs or, at least, for certain inputs. However, high-quality information is not always available or may not meet the aforementioned quality criteria, leading to the emergence of the oracle problem.

The oracle problem involves determining the correct output for a given input (and set of program or system states). It is a complex issue that requires addressing controllability and observability challenges. Oracles are commonly used in software testing, particularly in generative testing. Property-based testing (PBT) is a prevalent form of generative testing where, knowing the value of a property, one can generate a test with a series of inputs and verify whether the test output aligns with that value.

Testing encompasses two fundamental questions: "what" and "how." The "what" pertains to the generation of test cases-what we aim to verify. The "how" involves the test oracle problem-how we can verify it. For intricate systems, both questions are non-trivial. While the "what" can often be addressed through systematic, rational reasoning, the "how" frequently lacks a comprehensive solution, leading to the well-known test oracle problem.

A test oracle is a source that determines whether the output of a program (or function or method) is correct. The prior art literature recognizes several types of test oracles:
- Defined oracle: Usually linked with a formalized approach to software modeling and code construction. An example is a program that, independent of the system under test, processes the same input data to produce the same output.
- Derived oracle: Differentiates between correct and incorrect behavior based on information from system artifacts. Derived oracles yield specific correct results for particular inputs, which may include documentation, system execution results, and version characteristics of the system under test.
- Documented algorithm: A procedure that a human could use to calculate accurate results for specific inputs.
- Implicit oracle: Relies on hidden information and assumptions, such as inferences drawn from program failures, to determine potential issues. Implicit oracles have limitations due to their reliance on unspoken conclusions and assumptions.
- Human expert: A specialist who can evaluate the results and ascertain their correctness. When derivative or implicit test oracles are insufficient, human judgment is necessary to determine the test oracles.

The oracle does not execute the test; rather, once the test is performed, the oracle serves as a reference for valid results against which the system under test's outcomes can be compared. Oracles often function independently of the system under test, although the method's termination conditions are part of the system under test, as seen in automated oracles within design-by-contract models. Hardware oracles provide a means to gather information from the real world.

The test oracle problem lies in the difficulty of predicting the expected results for selected test cases or determining whether the actual results correspond with the expected ones. Known methods for addressing the oracle problem are hindered by the challenge of achieving a certain level of certainty with a limited number of test cases. The methods' drawbacks include errors, uncertainty, false positives, and false negatives when employing a large number of test cases. Additionally, there is a lack of confidence in the selected test cases if some yield positive results while others yield negative ones. A further limitation is the significant level of computing power required, particularly when employing fuzzy logic methods in conjunction with evolutionary algorithms and neural networks.

Alan Turing envisioned an "oracle" capable of answering any question. Yet, a more daunting task exists: using an oracle to make decisions in situations where the necessary input is not directly obtainable. For instance, such oracles are essential for authentication processes that employ zero-knowledge proof methods. Despite various concepts for such a test oracle being developed over the past five decades, a fully functional oracle of this nature has yet to be realized.

Oracles play a vital role in the decision-making process, which is a key component of authentication. Numerous authentication methods exist, which are processes that verify the claimed identity of an entity engaged in communication. The goal of authentication is to achieve a level of certainty that confirms an entity is indeed who it purports to be.

Several methods for user authentication have been disclosed in prior art. For example, Polish patent application PL416364 describes a method and server for user authentication using a mobile device. The method includes the server accepting a request for user authentication, assigning an access number, transmitting the access number to the user, the terminal device receiving information about a telecommunications call made by the user to the access number, and the server performing primary authentication, which involves reading the user's number and the access number, followed by transmitting the result of the primary authentication to the service.

Another method for network authentication to securely verify user identity is disclosed in Polish patent application PL2916509. This method involves the content provider's server redirecting the user's terminal to the identity verification server to obtain an encrypted Internet address signed with an asymmetric private key. The user terminal sends hardware scan data to the identity verification server, which then verifies the user terminal's identity based on the relationship between the hardware scan data and pre-stored reference hardware scan data.

Polish patent application PL417570 discloses a biometric enrollment/authentication arrangement and method. The system includes an imaging unit for capturing an image of a first body part used for enrollment or authentication, an acquisition unit for obtaining feature information from biometric data of a second body part, and a control unit that uses the feature information to determine the appropriateness of how the first body part is positioned on the imaging unit.

Additionally, Polish patent application PL2536095 describes a method and system for authenticating access to a service. The system comprises an operator access authentication system and one or more private access authentication systems, each communicatively coupled to the operator system. The system is configured to provide one or more proofs of authentication to facilitate the process.

Lastly, Polish patent application PL402602 outlines a method of authentication in a payment system using mobile equipment. This method involves wireless data transmission between a user's mobile telecommunications device with an NFC module and an isolated computer accounting system. The user validates the recipient's NFC label, retrieves an information packet, and sends it to the banking server. The server records the operation, checks the status of the records, and sends a response to the payment terminal. The information packet from the recipient's NFC label is decrypted using the public key of asymmetric cryptography in the user's mobile device application and sent in decrypted or partially encrypted form.

The Polish patent application PL2166697 describes a method and system for user authentication using a mobile device. This system involves reading a 2D code, which contains the URL of the authentication system and an encoded query generated by the authentication system. The encoded query is processed and a response is calculated using a secret personal key and a timestamp. A message is then sent to the authentication system to determine if the response to the query was generated using the secret personal key.

The Polish patent application PL376174 describes an authentication method for documents and objects using patterns that show a moiré effect. This invention relies on moiré patterns created by superimposing a base layer made of base band patterns and a revealing line grid, also known as the revealing layer.

There are numerous known methods of multi-factor authentication. These methods require the user to successfully present two or more proofs to the authentication mechanism. These proofs can be something the user knows (like a secret or password), something the user has (like a USB stick with a secret token), something the user is (biometric methods such as fingerprint, iris, voice, typing speed, pattern at key intervals), or somewhere the user is (like using GPS signals to identify location).

Other Polish patent applications describe various methods and systems for authentication. PL391908 describes a method and system for authenticating electronic transactions. PL389936 describes a method for identifying and authenticating a user of an application or computer system. PL389742 describes a device and method for identifying and authenticating identity, which includes a memory module for storing identification data of a registered user identity, a microcontroller, and an identity input module. PL382863 describes systems and methods for user authentication. PL2928152 describes a method for user authentication of a mobile device using multiple sensors.

However, these known authentication methods have limitations. They can produce errors, uncertainty, and false positive and negative responses, even with minor changes in user biometric data. Trust issues can also arise with authentication factors, especially when some factors give a positive response and others give a negative response.

Zero-knowledge proofs are cryptographic procedures that allow one party to prove to another that they possess certain information, without revealing that information. These proofs are often used in authentication processes, particularly in systems based on blockchain technology. In these systems, one party wants to prove its identity to another party using secret information (like a password), but doesn't want the other party to learn anything about that information.

Zero-knowledge proofs have certain properties. If the prover has the information in question, they can always convince the verifier. If the prover doesn't have the information, they can deceive the verifier into thinking they do, but the probability of this happening is almost zero.

Another method that utilizes zero-knowledge proofs is for identity determination. A private key serves as an "identity indicator," and through a specific protocol, one can prove their identity. This implies that one can verify their identity without resorting to various physical devices and data, such as passports and personal photos (retina, fingerprints, face, etc.).

Zero-knowledge proofs are a promising method for enforcing honest behavior and ensuring the "legitimacy" of a transaction, without revealing the actual purpose of the transaction or other sensitive data. Beyond their use in cryptocurrencies, the integration of zero-knowledge proofs into blockchain technology could have even greater implications. They provide a mechanism for legitimate exchanges while preserving privacy.

A zero-knowledge proof must satisfy the following conditions:
- Completeness - if the statement is true, an honest verifier will be convinced of this fact by an honest prover.
- Soundness - if the statement is false, a dishonest (cheating) prover will not convince the verifier of its truth.
- Zero-knowledge - if a statement is true, a dishonest verifier will not learn anything more about it other than this fact.
- Any rogue verifier can simulate a protocol that will appear as an interaction between the prover and the verifier.

A private key can be generated based on a graph containing user information. Various graph matching techniques are known and have been successfully applied to different biometric features and the design of robust real-time biometric systems.

Biometric systems are human pattern recognition systems used for individual identification and verification. Authenticity is determined based on certain measurable physiological or behavioral characteristics that individuals possess.

Graph isomorphism can then be used to implement the authentication process. The robust architecture of any biometric system ensures effectiveness in terms of rotation, translation, scaling effect, and image deformation on the image plane.

Zero-knowledge proof authentication methods based on the graph isomorphism theorem exist. However, there is no known polynomial algorithm that, given two isomorphic graphs, finds isomorphism between them (i.e., assignments between the vertices of one graph and the other, such that all edges connect the same vertices). Using such an algorithm, it would be possible to implement an authentication method with zero-knowledge proof conditions.

Nonetheless, the zero-knowledge proof procedure faces several challenges. The level of computing power and performance required to support trust relationships can be problematic. For instance, speed and scalability remain limitations of the blockchain. Moreover, blockchain participants still need to trust that the cryptography (and corresponding source code) is robust enough to prevent malicious attacks on the platforms.

The main challenge is proving that one party possesses the information without revealing its content. The protocol must consider that the prover can only convince the verifier if the statement is indeed proven.

The drawback of known zero-knowledge proof methods is the requirement for significant computing power and high performance. Zero-knowledge proof methods poorly integrate with biometric methods for user authentication, and therefore, do not provide assurance of the identity of the subject involved in the communication process.

Zero-knowledge proofs also have limitations. They require significant computing power and performance, and they don't integrate well with biometric methods for authentication. They can confirm that someone has a secret key or password, but they can't rule out the possibility of key theft or unauthorized use. A hardware secret token (key) can be duplicated by a brute force attack.

Zero-knowledge proofs are not strictly mathematical proofs because there's always a small chance that a dishonest prover will convince the verifier of a false claim. However, techniques exist to reduce this error to low values.

Zero-knowledge proofs don't produce binary results ("yes" or "no"), but rather probabilistic results ("probably yes"). The degree of probability depends on the number of tests conducted during the authentication protocol.

Classical logic, which only classifies according to true/false, can't effectively handle ambiguity and contradictions. Fuzzy logic, a type of multivalued logic that allows for intermediate values between true and false, is more effective under conditions of information uncertainty.

Fuzzy logic is one of the multivalued logics, which is a generalization of classical bivalued logic. In fuzzy logic, between state 0 (false) and state 1 (true), a number of intermediate values are stretched, which determine the degree of membership of an element in a set.

Fuzzy logic can be implemented effectively by a hardware artificial neural network. Together with evolutionary algorithms and neural networks, fuzzy logic methods are modern tools for performing authentication protocols using zero-knowledge proofs.

Neural networks, also known as artificial neural networks, are mathematical structures that can be modeled in software or hardware to perform calculations or signal processing. These networks consist of interconnected processing elements called artificial neurons, which execute basic operations on their inputs.

A neural network is an assembly of artificial neurons that process data, communicate with one another, and operate in parallel. The patterns of connections between neurons in a neural network are chosen arbitrarily and do not replicate actual neural structures.

Neurons within neural networks are organized into layers. The input layer receives external information, processes it through a summation block and an activation function block, and then forwards it to the hidden layers. The output layer completes the final computations based on the data received and recalculated by all previous layers, ultimately delivering a decision, which could be the result of authentication using zero-knowledge proof.

A neural network's defining characteristic as a computational tool is its ability to address practical problems without the need for prior mathematical formalization. From a cybernetics perspective, artificial neural networks transform indeterminate input information into determined output values.

In technical sciences, artificial neural networks are employed for various purposes, including:
- Approximation and prediction, inferring output from input data without explicitly defining their relationship;
- Classification and recognition;
- Data analysis, where neural networks automate inference processes and identify significant data relationships.

Neural networks are characterized by a structure of interconnected neurons with synapses. These synapses are associated with weights, which are numerical values whose interpretation varies depending on the model. Neural networks can differ in topology, architecture, or training methods.

Neural networks are particularly useful in authentication protocols based on zero-knowledge proof. Their most notable ability is to learn from examples and to generalize the acquired knowledge.

During information processing, neurons utilize parameters known as weights, which are assigned to connections and modified throughout the network's training. Based on the provided data, the network learns to solve tasks correctly. The training process involves selecting weight values that best address the given task using a properly prepared dataset. The goal is to minimize the cost function, which indicates the network's error margin.

For authentication decisions using zero-knowledge proof, Self-Organizing Maps (SOMs), also called Kohonen networks, can be utilized. These are networks of neurons associated with coordinates in an n-dimensional space. Training such networks involves adjusting the neurons' coordinates to match the structure of the analyzed data, effectively molding the network around the data sets.

Among training types, supervised training is most common. It involves providing the neural network with examples and their correct solutions. Through properly described cases, the network learns to solve similar tasks. Training concludes when the error falls below a predetermined threshold or when the maximum number of training steps is reached.

A known drawback of methods for comparing test results using fuzzy criteria, implemented by an artificial neural network, is the complexity and duration of the network's training. The typical work cycle of an artificial neural network is: training, testing, reconfiguration, and more training. Reconfigurable computing methods can be applied to create the network structure during training.

Reconfigurable computing systems combine the flexibility of general-purpose processors with the high performance of specialized integrated circuits, such as highspeed programmable logic gate arrays (FPGAs). Reconfigurable computing is achieved by integrating a general-purpose processor with an FPGA. This method can be applied to the hardware reconfiguration of artificial neural networks, reducing the required computing power and shortening the training process. The processor controls the behavior of the neural network, adjusting it to perform specific tasks efficiently. Once trained, the network can be reconfigured to adapt to new information, achieving high performance and reduced training time.The inconvenience is that currently the reconfigurable computation is implemented by merging a universal processor with an FPGA chip. The problem is that the above chip does not contain elements for creating a neural network.

The number of training cycles can be substantial, presenting a type of NP-complete problem. To decrease the number of training cycles, optimization methods such as metamorphic testing should be employed.

Metamorphic testing is a property-based software testing technique that effectively addresses the test oracle problem and the test case generation problem. This technique utilizes input baseline data, and the output data is generated by the process under examination. For instance, the basic data might be text images, the output data could be text, and the process under test could be text recognition.

Additionally, supplementary input data, derived from the basic data and additional data, are utilized. An example of this could be photos of text as the basic data and artificially created "noise" from pixels as the supplementary data. The supplementary data are not generated randomly but according to a predetermined rule. A variety of additional data options are available. Subsequently, the output data generated by the same process under test (for instance, text recognition) is calculated based on the input supplementary data.

If all tests yield the same output data, it indicates that the tests are successful and the process is functioning correctly. However, if even one test returns a different result, it signifies that the tests have failed and the process is malfunctioning. There is no need to verify the content of the output at any stage. It is sufficient to confirm that "all tests returned the same output", for instance, based on the identity of the hash functions of the output data. This approach now makes it possible to generate complex tests and apply metamorphic testing to zero-knowledge proof.

A metamorphic relation exists when two sets of input data and their corresponding output data are related. Tests utilizing this property are called metamorphic tests. In complex systems such as blockchains, identifying metamorphic relations may be more feasible than finding properties of individual inputs or outputs. These relations are essential properties of the process's intended functionality and require multiple executions of the process. Although initially proposed for software verification, metamorphic testing has evolved into a paradigm encompassing verification, validation, and other error assessment types for complex information systems, such as detecting errors in bioinformatics data.

Traditional metamorphic testing methods necessitate absolute confidence when comparing test outputs. However, when dealing with authentication data, it is necessary to compare test results using fuzzy criteria.

### SUMMARY OF THE INVENTION

A technical issue that remains unresolved in prior art is that existing oracle implementations cannot determine the correct output when high-quality input data is either unavailable or fails to meet quality standards. This problem is exacerbated by errors, uncertainty, false positives, and false negatives when changes in oracle input quality are permitted. It becomes impossible to achieve an adequate level of assurance with even minor unacceptable changes in any oracle input data quality parameter.

The oracle plays a crucial role in the user authentication process. Issues with the oracle can lead to unacceptable errors in this process. The decision to either allow or prohibit communication is based on the confirmation of the declared identity of the entity involved in the communication process, i.e., user authentication.

With user authentication, computer programs responsible for authentication cannot achieve a certain level of certainty about whether the user is indeed who they claim to be. Known oracle issues in the user authentication process can cause problems when deciding whether to allow or prohibit user-computer communication at the operating system level.

Therefore, it would be beneficial to improve the solution to the oracle problem and authentication systems based on them, with the aim of achieving an optimal authentication method.

Therefore, there is a need to develop a method to address the issues of oracle and oracle-based authentication systems, characterized by at least some of the following features:
- Errors, uncertainty, false positives, and false negatives should be less than 0.5% with acceptable changes in input information.
- The confidence level should be at least 99.5%. This level of certainty should be achieved with changes in the level of confidence in the input information between 10% and 100%.
- The time required for the oracle-based decision process for a certain level of confidence should be minimal and not heavily dependent on the computing power of the oracle implementation system.
- If the evidence of the decision process is true, the oracle-based decision process will be convinced.
- If the evidence of the decision process is false, the oracle-based decision process will not be convinced.
- Achieving a level of certainty of at least 99.5% should be possible with 3 to 10 pieces of evidence.
- If the evidence of the decision process is true, the oracle-based decision process will not learn anything beyond the fact indicated above.
- Anyone can simulate a decision process protocol that will appear as an interaction between the prover and the oracle. However, in this case, the oracle will not receive a response from the honest prover, nor will it receive the data of the honest prover.
- The oracle-based authentication system does not eliminate the possibility of key theft, but it does prevent a dishonest prover from using the key.
- The oracle-based authentication system prevents an honest prover from using another key without a special procedure.

The object of the invention is a method for authenticating a user of a computer system by means of an oracle, comprising a pluggable authentication module within the computer system and an external security key, based on user authentication proofs and a zero-knowledge proof protocol. The external security key comprises: a first artificial neural network configured to receive user authentication proofs and first supplementary data and to generate first output data, and a second artificial neural network configured to receive the first output data and second supplementary data and to generate second output data. The pluggable authentication module is configured to generate first supplementary data and second supplementary data dedicated to the user to be authenticated. The method comprises the following steps: configuring the structure of the first neural network based on the user authentication proofs; generating the first supplementary data dedicated to the user to be authenticated, by means of the pluggable authentication module; processing the user authentication proofs and the first supplementary data in the first neural network to generate first output data; processing the first output data and the second supplementary data in the second neural network, which is pre-trained for authenticating the user assigned to the security key, by performing a plurality of tests, each time using different variants of the second supplementary data to generate second output data, and transmitting the second output data to the pluggable authentication module; checking, by means of the pluggable authentication module, whether the output data are consistent across all the performed tests, and if so, granting permission to authenticate the particular user in the computer system.

Preferably, the method comprises performing a procedure for configuring the security key for the given user by: configuring the structure of the first neural network based on the user authentication proofs; generating the first supplementary data and variants of the first test output data using a metamorphic relation, by means of the pluggable authentication module; performing cyclical training of the first artificial neural network by modifying its topology and the mechanism of each of its neurons based on the user authentication proofs and the first supplementary data; creating second supplementary input data using a metamorphic relation, by means of the pluggable authentication module; training the second artificial neural network based on the first output data and the second supplementary data, and subsequently storing the configuration of the trained second neural network for subsequent authentication of the given user; and storing the configuration of the pluggable authentication module for subsequent authentication of the given user.

The invention also relates to a computer system for authenticating a user of the computer system by means of an oracle, comprising a pluggable authentication module within the computer system and an external security key, based on user authentication proofs and a zero-knowledge proof protocol. The external security key comprises: a first artificial neural network configured to receive user authentication proofs and first supplementary data and to generate first output data, and a second artificial neural network configured to receive the first output data and second supplementary data and to generate second output data. The pluggable authentication module is configured to generate first supplementary data and second supplementary data dedicated to the user to be authenticated.

The solution according to the invention may be characterized by at least one of the following features:
The Kohonen network type is utilized in a hardware artificial neural network.

A reconfigurable artificial neural network is employed, which uses reconfigurable computing.

User authentication proofs are converted into isomorphic graphs and graph Hamiltonians, which are generated from data gathered by user authentication elements.

The first input supplementary data, authentication evidence, and first output data are interconnected through a metamorphic relation.

The first artificial neural network processes authentication evidence and first input supplementary data into first output data using metamorphic testing, which involves repeatedly conducting tests of the processing with a different variant of first input supplementary data each time.

The first artificial neural network employs the zero-knowledge proof protocol to generate first output data, which does not include actual user data.

The tests conducted by the first artificial neural network to transform authentication evidence and first input supplementary data into first output data are deemed successful only if all tests yield similar output data.

The degree of similarity of the first output data for each test is assessed by the second artificial neural network.

Second input supplementary data, authentication evidence, and second output data are interconnected through a metamorphic relation.

The second artificial neural network processes first output data and second input supplementary data into second output data using metamorphic testing, which involves repeatedly conducting tests of the processing with a different variant of second input supplementary data each time.

The processing tests conducted by the second artificial neural network of the authentication evidence of the first output data and the second input supplementary data into second output data are deemed successful only if all tests yield identical second output data.

Metamorphic testing includes condition checking: the tests conducted by the first artificial neural network to process authentication evidence and first input supplementary data into first output data are deemed successful only if all tests yield similar output data.

The pluggable authentication module generates second input supplementary data and first input supplementary data based on second output data using a metamorphic relation.

Based on the second output data, the pluggable authentication module generates an authentication decision that determines whether the user is allowed or denied communication with the computer system.

The topology and operational mechanism of each neuron in the first artificial neural network are developed based on user authentication proofs during the training process of the first artificial neural network.

The topology and operational mechanism of each neuron in the first artificial neural network do not include direct user authentication proofs, but only contain significant links between user authentication proofs.

The topology and operational mechanism of each neuron in the second artificial neural network are developed based on the results of training the first artificial neural network during the training process of the second artificial neural network.

### BRIEF DESCRIPTION OF THE DRAWINGS

The object of the invention is illustrated in an exemplary implementation depicted in the figures, wherein:
FIG. 1 presents a schematic diagram of an exemplary implementation of a computer system for user authentication;
FIG. 2 illustrates the process of associating the authentication system with a specific user;
FIG. 3 depicts the process of user verification.

### DETAILED DESCRIPTION

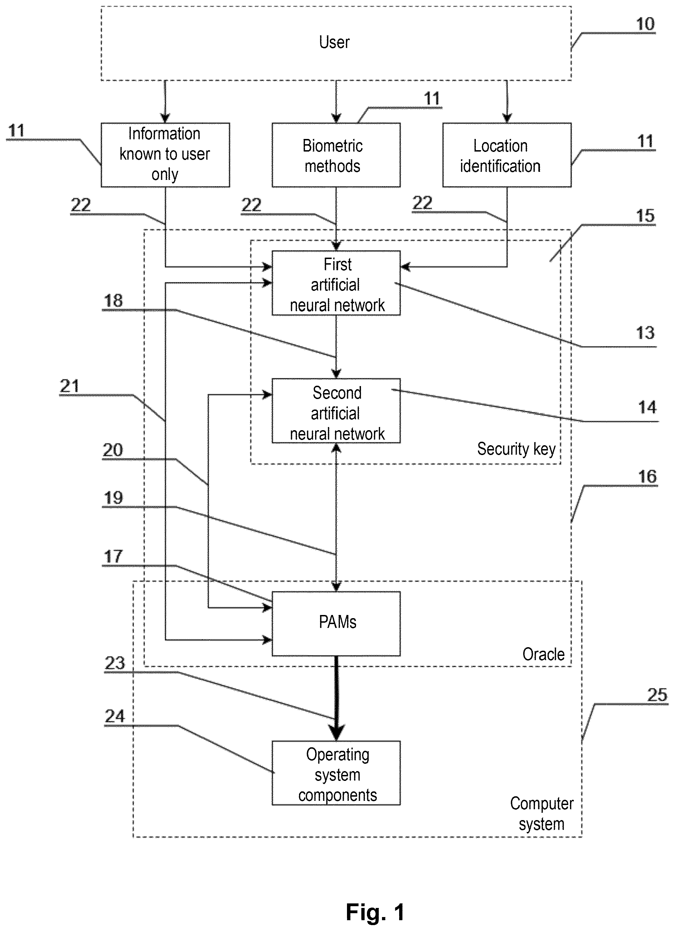

An exemplary computer system for user authentication, implemented in accordance with the present invention and shown in FIG. 1, includes the following components:
The system is designed for the authentication of a user 10, where the user may be an individual, a group of individuals, an institution, an organization, or a separate computer system requiring authentication.

The system comprises user authentication elements 11a, 11b, 11c, which are hardware modules used to obtain multi-factor authentication information. For example:
- Module 11a retrieves information exclusively possessed by the user, such as a keyboard for entering a secret code or password;
- Module 11b retrieves biometric information associated with the user, such as a fingerprint reader, an iris camera, or a microphone for voice recording, as well as a keyboard for typing analysis based on speed or pattern;
- Module 11c is for location identification, such as a GPS chip.

The computer system 25 is a programmable device capable of automatically performing a sequence of arithmetic or logical operations.

An oracle 16 comprises computer hardware with a security key 15 and software in the form of pluggable authentication modules (PAMs) 17. The oracle decides whether to permit or deny user 10 access to communicate with computer system 25.

A security key 15 is typically a small device connected to a USB port, required for the operation of the computer system's operating system 25.

Pluggable authentication modules (PAMs) 17 are software components that manage the login environment of the operating system.

The security key 15 is based on two neural networks 13, 14.

The first neural network is a hardware Kohonen network composed of artificial neurons. The configuration changes of this network 13 are achieved through reconfigurable computation using metamorphic testing. Additionally, network 13 implements a zero-knowledge proof protocol to generate first output data 18, which includes the network's structural graphs, isomorphic graphs based on actual user data, and graph Hamiltonians. The first neural network 13 generates decision options regarding user authenticity with varying probabilities and facilitates interaction between user 10 and the second neural network 14.

The second neural network 14, also a hardware Kohonen network, interacts with the first neural network 13 and the PAMs 17. It processes the results of metamorphic testing based on fuzzy criteria and generates the decision to allow or prohibit user 10 from communicating with computer system 25.

The computer system 25 operates according to specific rules and principles to achieve a defined goal and includes computer hardware, an operating system, and application software. The diagram highlights the operating system components 24 necessary for the authentication process. Other components of the computer system can be implemented using known methods and do not impact the implementation of the present invention.

PAMs 17 authenticate users logging into the system and can also be utilized by applications for the authentication process. They implement the metamorphic testing protocol of zero-knowledge proof.

The PAMs 17 facilitate the interaction between the oracle 16 and the operating system components 24, producing the final technical effect of allowing or prohibiting communication with the user at the operating system level.

The method according to the invention encompasses two main aspects:
- Training (associating) the authentication system with a specific user;
- Authenticating the user using the established authentication system.

The oracle software is executed on both the computer system 25 and the security key 15.

The structure of the authentication system remains unchanged during training or authentication. However, the operation modes of its various parts, the data, and the physical (hardware) structure of the neural networks are modified during the development of the authentication system.

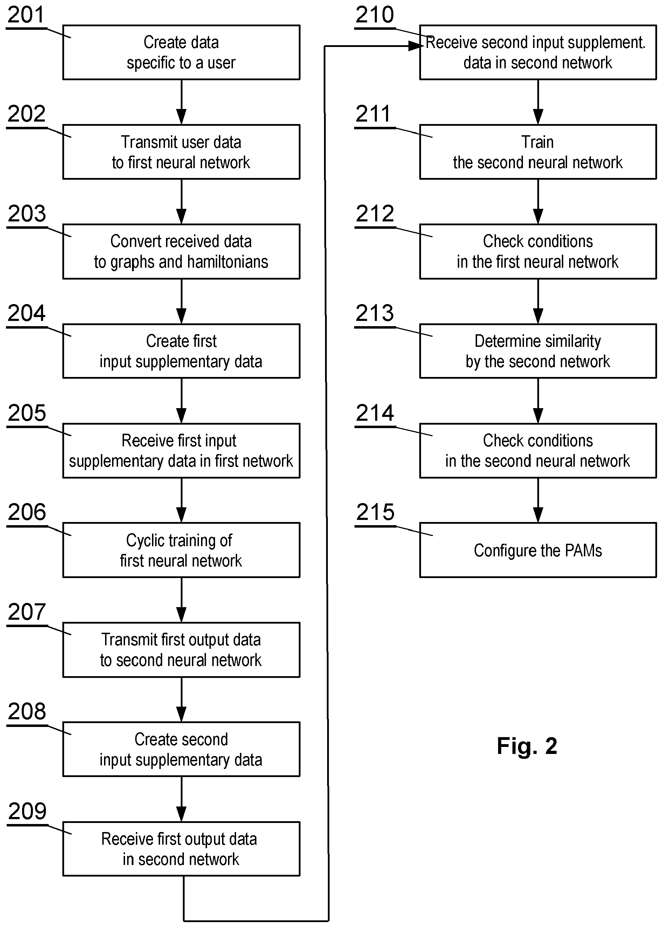

Training the authentication system to associate it with a specific user involves the following steps, as shown in FIG. 2:
In step 201, user information 10 is collected using authentication elements 11. For instance, a password is captured in module 11a, a fingerprint in module 11b, and a location in module 11c.

The authentication evidence 22 gathered in step 201 is then passed to the first neural network 13 in step 202.

In step 203, the authentication evidence 22 is transformed into structural graphs of the first neural network 13, isomorphic graphs, and graph Hamiltonians.

The first neural network 13 initially consists of a layered structure of interconnected elementary units. Each connection has an assigned weight, representing knowledge of the authentication evidence 22. The network employs a structure similar to an RBF (Radial Basis Function) network with Kohonen LVQ (Learning Vector Quantization
The neural network is composed of three layers. The first layer comprises a number of input neurons equal to the dimension of the feature space (vector space), which represents authentication evidence. The second layer includes hidden neurons with a radial activation function, demonstrating the interconnection and influence of input parameters on the network output. The third layer is made up of output neurons with a "maximum" activation function, which amplifies the influence of a parameter on the network output based on the selected rule. The network's elements, their connections, the weight of each connection, and the input and output parameters are all represented in an ordered data structure (a graph). This graph is then transformed into an isomorphic graph using known algorithms (bijections). The Hamiltonian cycle for graphs is calculated using one of the algorithms, such as Depth-First Search (DFS).

In step 204, the pluggable authentication module 17 generates the first supplementary data 21 based on authentication evidence 22, and variations of the first test output data 18 using a metamorphic relation. For instance, the supplementary data 21 represents a specific type of noise - not random, but strictly defined. The supplementary data 21 is chosen in such a way that some of its content leads the network to provide correct responses, while other content results in incorrect responses. It is crucial not only to ascertain whether the user being verified is genuine (correct operation of the neural network), but also to design a neural network that makes errors in a strictly defined manner (pseudo-randomness). Both correct and incorrect responses from the neural network are significant. This method yields two authentication parameters: accurate user data and a unique "character" of the neural network itself. While it might be possible to falsify specific user data, it is extremely challenging to counterfeit the behavior of the neural network itself. The method by which the neural network makes errors also serves as an authentication factor. During authentication, it is essential to execute two processes: validating the "right" user and rejecting the fraudulent user.

In step 205, the first artificial neural network 13 receives the first supplementary data input 21 from the pluggable authentication module 17.

Subsequently, in step 206, the first artificial neural network 13 undergoes cyclic training by altering its topology and the operational mechanism of each neuron based on user authentication evidence 22 and the first supplementary data input 21. Changes in the configuration of the first artificial neural network 13 are facilitated by reconfigurable computations. The training of the first artificial neural network 13 includes metamorphic testing: conducting tests of the processing using a different variant of the first supplementary data input 21 each time. The outcome of the training is an artificial neural network 13 tailored to the labeled data set. Moreover, the network employs a zero-knowledge proof protocol to generate the first output data 18 that does not include actual user data. In step 207, the first output data 18 is sent to the second neural network 14.

In step 208, PAMs 17 generate second supplementary data 20 based on second output data 19 from the second neural network 14 using a metamorphic relation.

In step 209, the second neural network 14 receives the first output data 18 from the first neural network 13.

In step 210, the second neural network 14 receives the second supplementary data 20 from PAMs 17.

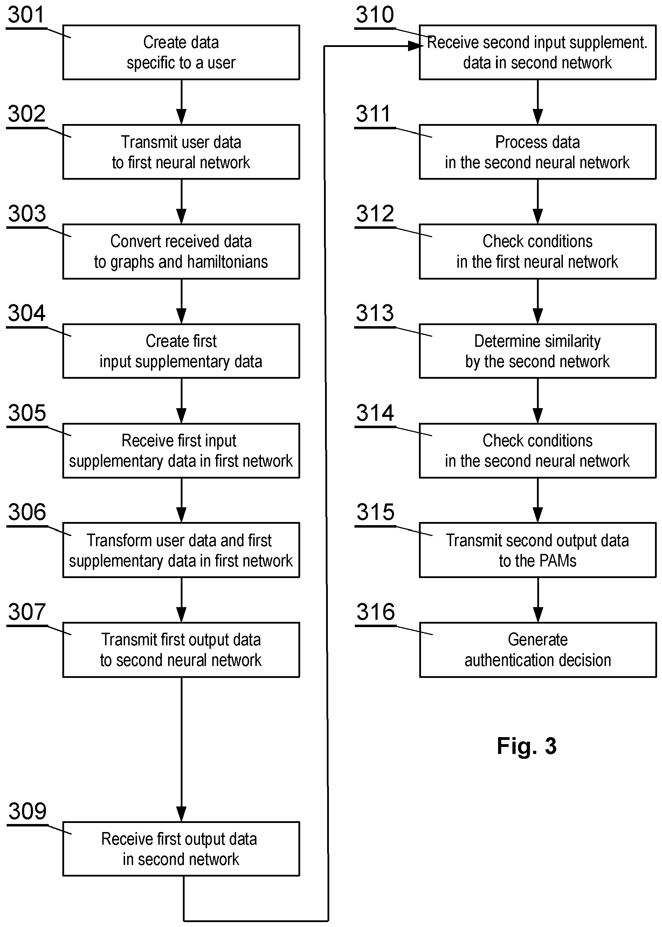

In step 211, the second artificial neural network 14 is trained by modifying the topology (reconfiguration) and mechanism of each neuron. This involves using the first output data 18 from the first neural network and the second input supplementary data 20. The outcome of this training is a second artificial neural network 14 with a topology specific to the labeled data set. The configuration changes of the second artificial neural network 14 are achieved through reconfigurable computation. The training of the second artificial neural network 14 includes metamorphic testing, which involves repeatedly conducting tests of the processing using a different variant of the second input supplementary data 20 each time. Furthermore, the network employs a zero-knowledge proof protocol to generate second output data 19, which does not include actual user data. The configuration of the trained second neural network 14 is stored in the security key 15 for use in subsequent user authentication procedures (Fig. 3).

In step 212, condition checking (decision-making) occurs: tests are conducted for the first artificial neural network 13 to process authentication evidence 22 and first input supplementary data 21 into first output data 18. Success is only achieved if all tests yield similar output data. A failure would indicate a network error, in which case the procedure of configuring the network should be repeated, until the network 13 correctly recognizes the user based on the data set comprising the authentication proof 22 and the first supplementary data input 21. If, even despite the reconfiguration, no positive response can be obtained for the data set 21 and 22, the PAMs 17 shall be instructed to generate another supplementary data 21 and for these the training of the first network 13 shall be performed again.

In step 213, the second artificial neural network 14 evaluates the degree of similarity of the first output data 18 for each test. This is how the processing of metamorphic testing results based on fuzzy criteria is implemented. For instance, several tests are conducted, the accuracy of each test is evaluated, and then a decision is made based on the results of these tests. This decision could be based on, for example, the average value of several tests. In step 214, condition checking (decision-making) occurs: the second neural network 14 is tested to process the first output data 18 and second supplementary data 20 into second output data 19. Success requires all tests to return consistent second output data 19. In case of failure, the training cycle of both networks 13 and 14 must be repeated.

The verification steps 212-214 are therefore performed in a cycle until positive results are obtained from both networks 13 and 14, meaning that they are correctly trained to recognize the given user.

In step 215, the necessary data for the user authentication process is recorded into PAMs 17, configuring them based on the second output data 19. Specifically, the pluggable authentication modules 17 register the responses of the neural networks to various data (neural network behavior), the graph isomorphisms of the network structure, the Hamilton cycles for the network, additional information regarding the organization of the communication protocol of the pluggable authentication modules 17 with the neural networks. The PAMs 17 therefore store information that represents the training behavior of the neural networks, the structure of the neural networks during the training and the structure of the user information. This corresponds only to information about the structure of these objects in the form of isomorphisms of the original information. The isomorphisms result in an exact match between the original information 22 and the information stored in the PAMs 17. However, the original information 22 cannot be restored from the information contained in the PAMs 17.

Authentication of a user through the authentication system, trained according to the procedure depicted in FIG. 2, involves the following steps as illustrated in FIG. 3. This procedure verifies whether the authentication attempt corresponds to the user whose biometric data was previously configured by the oracle.

Step 301 involves the creation of user information 10 through the collection of user authentication elements 11. For example, a password is collected in module 11a, a fingerprint in module 11b, and a location in module 11c.

The authentication evidence 22, extracted in step 301, is then passed to the first artificial neural network 13 in step 302.

In step 303, the authentication evidence 22 is transformed into graphs that represent the structure of the first artificial neural network 13, into isomorphic graphs, and into graph Hamiltonians, using a method analogous to the training procedure in step 203. Essentially, the structure of the first neural network 13 is configured based on the received authentication evidence 22.

Step 304 involves the pluggable authentication module 17, which was previously configured in the procedure depicted in FIG. 2, forming the first input supplementary data 21 based on the authentication evidence 22 and generating variants of the first test output data 18 using a metamorphic relation. While the procedure in FIG. 2's step 204 created many variants of authentication test data 18 (e.g., hundreds or thousands), in step 304, it is sufficient to generate only a few complementary data 21.

The first artificial neural network 13 accepts the first supplementary data 21 input from the pluggable authentication module 17 in step 305.

Then, in step 306, the first artificial neural network 13 processes the user authentication proofs 22 and the first input supplementary data 21. This processing includes metamorphic testing, which involves repeatedly executing tests with different variants of the first input supplementary data 21. The network implements a zero-knowledge proof protocol to create the first output data 18, which does not contain actual user data.

In step 307, the first output data 18 is transmitted to the second artificial neural network 14. This procedure omits the equivalent of step 208 from the procedure in FIG. 2.

The second artificial neural network 14 accepts the first output data 18 from the first neural network 13 in step 309.

In step 310, the second artificial neural network 14 accepts the second supplementary data input 20 from the pluggable authentication module 17, as configured in the procedure of FIG. 2.

Step 311 sees the second artificial neural network 14 processing the first output data 18 of the first neural network and the second supplementary input data 20. This processing also comprises metamorphic testing, which involves repeatedly performing tests with different variants of the second supplementary input data 20.

In step 312, condition checking (decision-making) occurs: tests are conducted for the first artificial neural network 13 to process the authentication evidence 22 and first input supplementary data 21 into the first output data 18. Success is achieved only if all tests return similar output data. If the tests fail, user access to the system is either blocked or limited.

Step 313 involves the second artificial neural network 14 evaluating the degree of similarity of the first output data 18 for each test. This step implements the processing of metamorphic testing results based on fuzzy criteria. Additionally, the second neural network 14 employs a zero-knowledge proof protocol to create second output data 19, which does not contain actual user data.

In step 314, another round of condition checking (decision-making) takes place: tests are performed for the second artificial neural network 14 to process the first output data 18 from the first artificial neural network 13 and the second input supplementary data 20 into the second output data 19. Success is only achieved if all tests return the same second output data 19. The second artificial neural network 14 realizes the effect of processing the results of metamorphic testing based on fuzzy criteria.

The second output data 19 is then passed to the pluggable authentication module 17 in step 315.

Based on the received second output data 19, the pluggable authentication module 17 generates an authentication decision 23 in step 316. Successful authentication results in either granting or denying the user 10 permission to communicate with the computer system 25. This decision ultimately affects the internal functioning of the computer or its interfaces.

The correct authentication process is the result of the interaction between programs implementing the method according to the invention on the computer system 25, the pluggable authentication module 17, and the security key 15.

The solution according to the invention offers several technical advantages:
1. It addresses the issue of confidence in authentication factors when some factors yield positive responses and others negative.
2. It enables efficient processing of metamorphic testing results based on fuzzy criteria.
3. If the authentication evidence is true, an honest verifier will be convinced by an honest prover.
4. If the authentication evidence is false, a dishonest prover will not be able to convince the verifier of its truthfulness.
5. It allows for a confidence level of up to 99.5% or higher with a small number of authentication evidence, even as few as 3 to 10.
6. Errors, uncertainty, false positives, and false negatives can be reduced to less than 0.5% with acceptable variations in authentication evidence.
7. The level of certainty can exceed 99.5%, achievable with variations in the confidence level of the input information ranging from 10% to 100%.
8. The use of artificial neural networks 13 and 14 to achieve a certain level of confidence minimizes the authentication process time, which is largely independent of the computing power of the authentication system.
9. If the authentication proofs are true, a dishonest verifier will learn nothing beyond this fact, as the authentication system does not contain direct user authentication proofs but only a significant link between them ("zero knowledge proof").
10. A rogue verifier can simulate a protocol resembling an interaction between the prover and the verifier, but a dishonest verifier will not receive a response or data from an honest prover.
11. The authentication system does not prevent the security key from being stolen, but it does prevent a dishonest prover from using that key due to the strict linkage of the "zero knowledge proving" method with biometric authentication methods.
12. The authentication system prevents a dishonest prover from using a different key without a special procedure.

These results are achieved through the combined application of novel processes: metamorphic testing, zero-knowledge proving, data analysis based on fuzzy criteria, and reconfigurable computing.

The implementation of the solution to the oracle problem according to the invention allows for the generation of correct oracle output data when high-quality input data is unavailable or does not meet quality requirements. It enables the attainment of the required level of certainty despite significant changes in the quality parameters of the oracle input data.

The oracle is a crucial component in the user authentication process. Addressing the oracle problem eliminates errors in the user authentication process, thereby enabling accurate decision-making about whether to allow or prohibit a user's communication with the computer at the operating system level. This has significant potential for industrial application of the invention in computer systems.

## Claims

1. A method for authenticating a user (10) of a computer system (25) by means of an oracle (16), comprising a pluggable authentication module (17) within the computer system (25) and an external security key (15), based on user authentication proofs (22) and a zero-knowledge proof protocol, **characterized in that**:
- the external security key (15) comprises:
- a first artificial neural network (13) configured to receive user authentication proofs (11) and first supplementary data (21) and to generate first output data (18), and
- a second artificial neural network (14) configured to receive the first output data (18) and second supplementary data (20) and to generate second output data (19);
- the pluggable authentication module (17) is configured to generate first supplementary data (21) and second supplementary data (20) dedicated to the user to be authenticated;
- and the method comprises the following steps:
- configuring (303) the structure of the first neural network (13) based on the user authentication proofs (22);
- generating (304) the first supplementary data (21) dedicated to the user to be authenticated, by means of the pluggable authentication module (17);
- processing (306) the user authentication proofs (22) and the first supplementary data (21) in the first neural network (13) to generate first output data (18);
- processing (311) the first output data (18) and the second supplementary data (20) in the second neural network (14), which is pre-trained for authenticating the user assigned to the security key (15), by performing a plurality of tests, each time using different variants of the second supplementary data (20) to generate second output data (19), and transmitting the second output data (19) to the pluggable authentication module (17);
- checking, by means of the pluggable authentication module (17), whether the output data (19) are consistent across all the performed tests, and if so, granting (316) permission to authenticate the particular user in the computer system (25).

2. The method of claim 1, **characterized by** performing a procedure for configuring the security key (15) for the given user by:
- configuring (203) the structure of the first neural network based on the user authentication proofs (22);
- generating (204) the first supplementary data (21) and variants of the first test output data (18) using a metamorphic relation, by means of the pluggable authentication module (17);
- performing (206) cyclical training of the first artificial neural network (13) by modifying its topology and the mechanism of each of its neurons based on the user authentication proofs (22) and the first supplementary data (21);
- creating (208) second supplementary input data using a metamorphic relation, by means of the pluggable authentication module (17);
- training (211) the second artificial neural network (14) based on the first output data (18) and the second supplementary data (20), and subsequently storing the configuration of the trained second neural network (14) for subsequent authentication of the given user;
- storing (215) the configuration of the pluggable authentication module (17) for subsequent authentication of the given user.

3. A computer system for authenticating a user (10) of the computer system (25) by means of an oracle (16), comprising a pluggable authentication module (17) within the computer system (25) and an external security key (15), based on user authentication proofs (22) and a zero-knowledge proof protocol, **characterized in that**:
- the external security key (15) comprises:
- a first artificial neural network (13) configured to receive user authentication proofs (11) and first supplementary data (21) and to generate first output data (18), and
- a second artificial neural network (14) configured to receive the first output data (18) and second supplementary data (20) and to generate second output data (19);
- the pluggable authentication module (17) is configured to generate first supplementary data (21) and second supplementary data (20) dedicated to the user to be authenticated.
